(19) Europäisches Patentamt / European Patent Office / Office européen des brevets

(11) **EP 4 380 218 A1**

(12) **EUROPEAN PATENT APPLICATION**
published in accordance with Art. 153(4) EPC

(43) Date of publication:
**05.06.2024 Bulletin 2024/23**

(21) Application number: **21951935.2**

(22) Date of filing: **30.07.2021**

(51) International Patent Classification (IPC):
**H04W 16/28** (2009.01)  **H04W 24/10** (2009.01)

(52) Cooperative Patent Classification (CPC):
**H04W 16/28; H04W 24/10**

(86) International application number:
**PCT/JP2021/028470**

(87) International publication number:
**WO 2023/007736 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes: a control section that controls, based on an event related to at least one of a plurality of beams, at least one of first beam reporting not based on the event and second beam reporting based on the event; and a transmitting section that transmits, when the second beam reporting is performed, at least one of a random access channel related to first information related to a new candidate beam and a Medium Access Control (MAC) control element including second information related to a new candidate beam. According to one aspect of the present disclosure, it is possible to appropriately perform beam reporting based on an event.

FIG. 6

EP 4 380 218 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems, it is studied that a terminal performs beam reporting, based on an event.

However, a condition of the event and a method of beam reporting based on an event are not clear. Unless a condition of the event and a method of beam reporting based on an event are clear, this may cause deterioration in communication throughput / increase in overhead.

Thus, an object of the present disclosure is to provide a terminal, a radio communication method, and a base station with which beam reporting is performed appropriately based on an event.

Solution to Problem

A terminal according to one aspect of the present disclosure includes: a control section that controls, based on an event related to at least one of a plurality of beams, at least one of first beam reporting not based on the event and second beam reporting based on the event; and a transmitting section that transmits, when the second beam reporting is performed, at least one of a random access channel related to first information related to a new candidate beam and a Medium Access Control (MAC) control element including second information related to a new candidate beam.

Advantageous Effects of Invention

According to one aspect of the present disclosure, it is possible to appropriately perform beam reporting based on an event.

Brief Description of Drawings

[FIG. 1] FIG. 1 is a diagram to show examples of the number of RLM-RSs.
[FIG. 2] FIG. 2 is a diagram to show an example of a beam recovery procedure.
[FIG. 3] FIGS. 3A and 3B are diagrams to show examples of beam reporting by a plurality of UEs.
[FIG. 4] FIG. 4 is a diagram to show an example of a serving beam and a neighbor beam.

[FIG. 5] FIGS. 5A and 5B are diagrams to show examples of comparison of beams according to Embodiment 1-2.

[FIG. 6] FIG. 6 is a diagram to show an example of beam reporting according to Embodiment 1-3.

[FIG. 7] FIG. 7 is a diagram to show an example of a configuration of a MAC CE according to Embodiment 2-2.

[FIG. 8] FIG. 8 is a diagram to show another example of the configuration of the MAC CE according to Embodiment 2-2.

[FIG. 9] FIGS. 9A and 9B are diagrams to show examples of a timeline of event occurrence according to a fourth embodiment.

[FIG. 10] FIGS. 10A and 10B are diagrams to show other examples of a timeline of event occurrence according to the fourth embodiment.

[FIG. 11] FIG. 11 is a diagram to show an example of a schematic structure of a radio communication system according to one embodiment.

[FIG. 12] FIG. 12 is a diagram to show an example of a structure of a base station according to one embodiment.

[FIG. 13] FIG. 13 is a diagram to show an example of a structure of a user terminal according to one embodiment.

[FIG. 14] FIG. 14 is a diagram to show an example of a hardware structure of the base station and the user terminal according to one embodiment.

Description of Embodiments

(CSI Reporting)

In Rel-15/16 NR, a UE measures a channel state by using a certain reference signal (or a resource for the reference signal) and feeds back (reports) channel state information (CSI) to a base station.

The UE may measure a channel state by using a channel state information reference signal (CSI-RS), a synchronization signal / broadcast channel (Synchronization Signal / Physical Broadcast Channel (SS/PBCH)) block, a synchronization signal (SS), a demodulation reference signal (DMRS), and the like.

The CSI-RS resource may include at least one of a non-zero power (Non Zero Power (NZP)) CSI-RS and CSI-Interference Management (IM). The SS/PBCH block is a block including a synchronization signal (for example, a primary synchronization signal (PSS)), a secondary synchronization signal (SSS), and a PBCH (and a corresponding DMRS), and may be referred to as an SS block (SSB) or the like. An SSB index may be given to the time location of the SSB in a half frame.

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), Layer 1 (L1)-Reference Signal Received Power (RSRP) (reference signal received power in Layer 1), L1-Reference Signal Received Quality (RSRQ), an L1-Signal to Interference plus Noise Ratio (SINR), an L1-Signal to Noise Ratio (SNR), and the like.

The CSI may have a plurality of parts. A first part of the CSI (CSI part 1) may include information with a relatively small number of bits (for example, the RI). A second part of the CSI (CSI part 2) may include information with a relatively large number of bits (for example, the CQI) such as information defined based on CSI part 1.

As a method for feeding back the CSI, (1) periodic CSI (P-CSI) reporting, (2) aperiodic CSI (A (AP)-CSI) reporting, (3) semi-persistent (semi-permanent) CSI reporting (SP-CSI) reporting, and the like are under study.

The UE may be notified of information related to the CSI reporting (which may be referred to as CSI report configuration information), by higher layer signaling or physical layer signaling (for example, downlink control information (DCI)), or a combination of these. The CSI report configuration information may be configured by using an RRC information element "CSI-ReportConfig," for example.

Here, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (MAC PDU), or the like. The broadcast information may be, for example, a master information block (MIB), a system information block (SIB), minimum system information (Remaining Minimum System Information (RMSI)), other system information (OSI), or the like.

The CSI report configuration information may include information related to, for example, reporting periodicity, an offset, and the like, which may be expressed in certain time units (units of slots, units of subframes, units of symbols, or the like). The CSI report configuration information may include a configuration ID (CSI-ReportConfigId). The type of a CSI reporting method (whether or not it is SP-CSI, or the like) and a parameter such as reporting periodicity may be specified by the configuration ID. The CSI report configuration information may include information indicating which signal (or resource for which signal) is to be used to report measured CSI (CSI-ResourceConfigId) .

(Beam Management)

For Rel-15 NR thus far, a method of beam management (BM) has been studied. In the beam management, beam selection based on an L1-RSRP reported by the UE is under study. Changing (switching) a beam of a certain signal/channel may correspond to changing a transmission configuration indication state (TCI state) for the signal/channel.

Note that a beam selected by beam selection may be a transmit beam (Tx beam) or may be a receive beam (Rx beam). A beam selected by beam selection may be a UE beam or may be a base station beam.

The UE may report (transmit) a measurement result for beam management by using a PUCCH or a PUSCH. The measurement result may be, for example, CSI including at least one of an L1-RSRP, an L1-RSRQ, an L1-SINR, an L1-SNR, and the like. The measurement result may be referred to as beam measurement, a beam measurement result, a beam report, a beam measurement report, and the like.

The CSI measurement for a beam report may include interference measurement. The UE may use a resource for CSI measurement to measure channel quality, interference, and the like to derive a beam report. The resource for CSI measurement may be, for example, at least one of the resource of an SS/PBCH block, the resource of a CSI-RS, any other reference signal resource, and the like. Configuration information of a CSI measurement report may be configured for the UE by using higher layer signaling.

A beam report may include a result of at least one of channel quality measurement and interference measurement. The result of channel quality measurement may include an L1-RSRP, for example. The result of interference measurement may include an L1-SINR, an L1-SNR, an L1-RSRQ, an index related to any other interference (for example, any index other than an L1-RSRP), and the like.

Note that the resource for CSI measurement for beam management may be referred to as a resource for beam measurement. A signal/channel targeted for the CSI measurement may be referred to as a signal for beam measurement. The CSI measurement/reporting may be interpreted as at least one of measurement/reporting for beam management, beam measurement/reporting, radio link quality measurement/reporting, and the like.

CSI report configuration information considering current-NR beam management is included in an RRC information element "CSI-ReportConfig." Information in the RRC information element "CSI-ReportConfig" will be described.

The CSI report configuration information (CSI-ReportConfig) may include report quantity information (which may be expressed as "report quantity" or an RRC parameter "reportQuantity") being information of a parameter to be reported. The report quantity information may be defined in the form of an ASN.1 object called "choice." Hence, one of parameters defined as the report quantity information (cri-RSRP, ssb-Index-RSRP, and the like) is configured.

A UE for which a higher layer parameter included in the CSI report configuration information (for example, an RRC parameter "groupBasedBeamReporting") is configured as enabled may include a plurality of resource IDs for beam measurement (for example, an SSBRI, a CRI) and a plurality of measurement results (for example, L1-RSRPs) corresponding to these for each report configuration, in a beam report.

A UE for which the number of reporting target RS resources being one or more is configured by a higher layer parameter included in the CSI report configuration information (for example, an RRC parameter "nrofReportedRS") may include one or more resource IDs for beam measurement and one or more measurement results (for example, an L1-RSRP(s)) corresponding to these for each report configuration, in a beam report.

(TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:

- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

A QCL type A RS may always be configured for a PDCCH and a PDSCH, while a QCL type D RS may be configured additionally. Since it is difficult to estimate Doppler shift, delay, and the like, based on one-shot reception of a DMRS, the QCL type A RS is used to improve channel estimation accuracy. The QCL type D RS is used for reception beam determination at the time of DMRS reception.

For example, TRSs 1-1, 1-2, 1-3, and 1-4 are transmitted, and TRS 1-1 is notified as a QCL type C/D RS depending on the TCI state of the PDSCH. By the UE being notified of the TCI state, the UE can use information obtained from results of past periodic reception/measurement of TRS 1-1, for reception of a DMRS for PDSCH / channel estimation. In this case, the QCL source of the PDSCH is TRS 1-1, and a QCL target is the DMRS for PDSCH.

(Unified/Common TCI Framework)

Using a unified TCI framework enables control of UL and DL channels by a common framework. In the unified TCI framework, instead of defining a TCI state and a spatial relation for each channel as in Rel. 15, a common beam (common TCI state) may be indicated to apply the common beam to all the UL and DL channels, or a common beam for UL may be applied to all the UL channels while a common beam for DL may be applied to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume a different TCI state (separate TCI state, separate TCI pool, UL separate TCI pool and DL separate TCI pool, separate common TCI pool, UL common TCI pool and DL common TCI pool) for each of UL and DL.

Default beam for UL and DL may be provided by beam management based on a MAC CE (MAC CE level beam indication). The default TCI state of a PDSCH may be updated to match a default UL beam (spatial relation).

A common beam / unified TCI state may be indicated from the same TCI pool (joint common TCI pool, joint TCI pool, set) for both UL and DL by beam management based on DCI (DCI level beam indication). X (> 1) TCI states may be activated by a MAC CE. UL/DL DCI may select one from the X active TCI states. The selected TCI state may be applied to both UL and DL channels/RSs.

The TCI pool (set) may be a plurality of TCI states configured by an RRC parameter or may be a plurality of TCI states (active TCI states, active TCI pools, sets) activated by the MAC CE among the plurality of TCI states configured by the RRC parameter. Each TCI state may be a QCL type A/D RS. As the QCL type A/D RS, an SSB, a CSI-RS, or an SRS may be configured.

(Radio Link Monitoring (RLM))

In NR, radio link monitoring (RLM) is used.

In NR, a network (NW, for example, a base station) may configure, for each BWP, a radio link monitoring reference signal (Radio Link Monitoring RS (RLM-RS)) for a UE by using higher layer signaling. The UE may receive configuration information for RLM (for example, a "RadioLinkMonitoringConfig" information element of RRC).

The configuration information for RLM may include failure detection resource configuration information (for example, a higher layer parameter "failureDetectionResourcesToAddModList"). The failure detection resource configuration information may include a parameter related to RLM-RS (for example, a higher layer parameter "RadioLinkMonitoringRS").

The parameter related to RLM-RS may include information indicating correspondence with a purpose of RLM, an index corresponding to the resource of an RLM-RS (for example, an index included in a higher layer parameter "failureDetectionResources" (RadioLinkMonitoringRS in failureDetectionResourcesToAddModList)). The index may be, for example, an index of the configuration of a CSI-RS resource (for example, a non-zero-power CSI-RS resource ID) or may be an SS/PBCH block index (SSB index). The information of the purpose may indicate a beam failure or a (cell-level) Radio Link Failure (RLF), or both of these.

The UE may identify an RLM-RS resource, based on the index corresponding to the RLM-RS and perform RLM by using the RLM-RS resource.

In an RLM procedure of Rel. 16, the UE follows the following implicit RLM-RS determination procedure.

{Implicit RLM-RS Determination Procedure}

If the UE is not provided with an RLM-RS (RadioLinkMonitoringRS) and the UE is provided with a TCI state including one or more CSI-RSs for PDCCH reception, the UE follows Procedures 1 to 4 below.

{{Procedure 1}}

If an active TCI state for PDCCH reception includes only one RS, the UE uses the RS provided for the active TCI state for PDCCH reception, for RLM.

{{Procedure 2}}

If an active TCI state for PDCCH reception includes two RSs, the UE assumes that one of the RSs is with QCL type D and uses the RS with QCL type D for RLM. The UE does not assume that both of the RSs are with QCL type D.

{{Procedure 3}}

The UE is not required to use an aperiodic or semi-persistent RS for RLM.

{{Procedure 4}}

For $L_{max} = 4$, the UE selects $N_{RLM}$ RSs provided for an active TCI state for PDCCH reception, in a plurality of CORESETs associated with a plurality of search space sets, in an order from the smallest monitoring periodicity. If more than one CORESET is associated with a plurality of search space sets with the same monitoring periodicity, the UE determines the order of the CORESETs from the highest CORESET index.

Here, $L_{max}$ denotes the largest number of SS/PBCH block indices in a cell. The largest number of the SS/PBCH blocks transmitted in a half-frame is $L_{max}$.

As described above, when the UE is not provided with an RLM-RS, the UE performs implicit RLM-RS determination and uses an active TCI state for PDCCH reception for RLM. When $L_{max} = 4$, the UE selects $N_{RLM}$ RSs first in an ascending order of monitoring periodicities of search space sets and then in a descending order of CORESET indices. The UE selects a CORESET.

The UE can be configured with up to $N_{LR-RLM}$ RLM-RSs for a link recovery procedure and RLM. Up to $N_{RLM}$

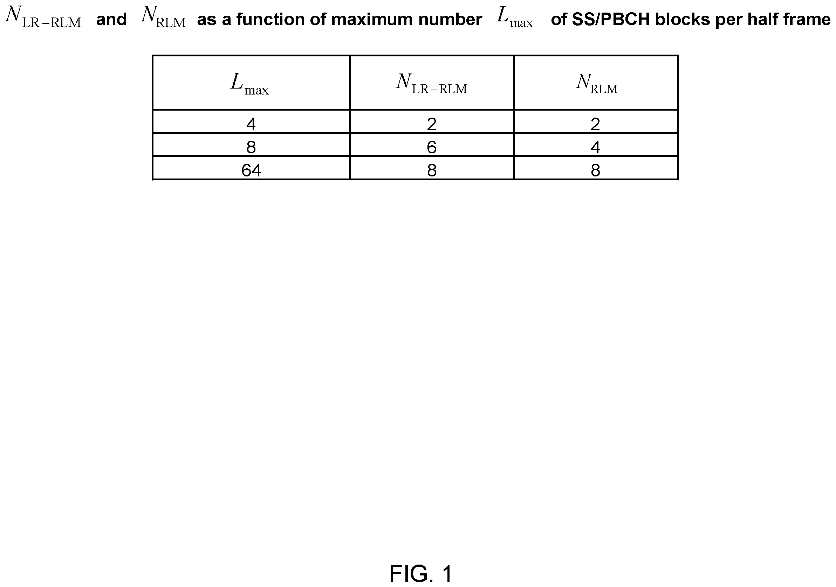

RLM-RSs are used for RLM depending on $L_{max}$, from the $N_{LR-RLM}$ RLM-RSs. In Rel. 16, as shown in FIG. 1, $N_{RLM} = 2$ when $L_{max} = 4$, $N_{RLM} = 4$ when $L_{max} = 8$, and $N_{RLM} = 8$ when $L_{max} = 64$.

(Beam Failure Detection (BFD) / Beam Failure Recovery (BFR))

In NR, communication is performed by using beam forming. For example, a UE and a base station (for example, gNB (gNodeB)) may use a beam used for signal transmission (also referred to as a transmit beam, Tx beam, or the like) and a beam used for signal reception (also referred to as a receive beam, Rx beam, or the like).

Using the beam forming is susceptible to interference from an obstruction, and thus it is assumed that radio link quality deteriorates. Due to deterioration of the radio link quality, radio link failure (RLF) may occur frequently. Occurrence of the RLF requires reconnection of a cell, and thus frequent occurrence of the RLF causes deterioration of system throughput.

In NR, in order to suppress occurrence of the RLF, a procedure for switching to another beam (which may be referred to as beam recovery (BR), beam failure recovery (BFR), L1/L2 (Layer 1/Layer 2) beam recovery, or the like) in a case where quality of a specific beam deteriorates. Note that the BFR procedure may be referred to simply as BFR.

Note that beam failure (BF) in the present disclosure may be referred to as link failure.

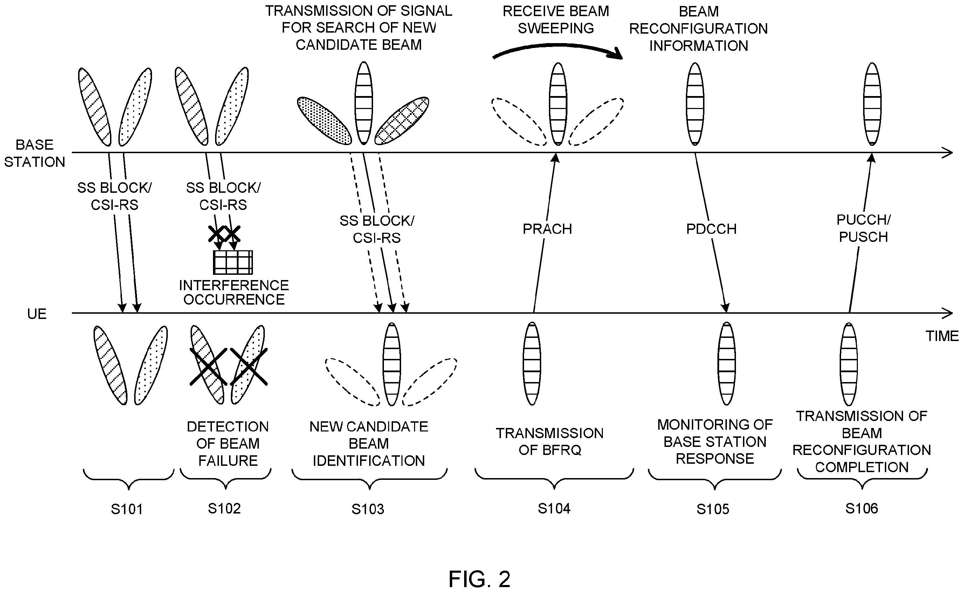

FIG. 2 is a diagram to show an example of the beam recovery procedure in Rel-15 NR. The number of beams and the like are just examples, and are not limited to this. In an initial state (step S101), the UE performs measurement based on a reference signal (RS) resource transmitted by using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding, changing, or the like these signals. The RS measured at step S101 may be referred to as an RS for beam failure detection (Beam Failure Detection RS (BFD-RS)), an RS to be used for a beam recovery procedure (BFR-RS), and the like.

At step S102, due to radio waves from the base station being interfered, the UE fails to detect a BFD-RS (or reception quality of an RS deteriorates). Such interference may occur due to an influence of an obstacle, fading, interference, or the like between the UE and the base station, for example.

The UE detects beam failure when a certain condition is satisfied. For example, the UE may detect occurrence of the beam failure when a BLER (Block Error Rate) for all of configured BFD-RSs (BFD-RS resource configurations) is less than a threshold value. When occurrence of the beam failure is detected, a lower layer (physical (PHY) layer) of the UE may notify (indicate) a beam failure instance for a higher layer (MAC layer).

Note that judgment standards (criteria) are not limited to the BLER, and may be reference signal received power in the physical layer (Layer 1 Reference Signal Received Power (L1-RSRP)). Instead of the RS measurement or in addition to the RS measurement, beam failure detection may be performed based on downlink control channel (Physical Downlink Control Channel (PDCCH)) or the like. The BFD-RS may be expected to be quasi-co-located (QCLed) with a DMRS for a PDCCH monitored by the UE.

Here, QCL is an indicator indicating statistical properties of the channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

Information related to the BFD-RS (for example, indices, resources, numbers, the number of ports, precoding, and the like for the RS), information related to the beam failure detection (BFD) (for example, the above-mentioned threshold value), and the like may be configured (notified) for the UE by using higher layer signaling or the like. The information related to the BFD-RS may be referred to as information related to resources for BFR or the like.

A higher layer (for example, the MAC layer) of the UE may start a certain timer (which may be referred to as a beam failure detection timer) when receiving beam failure instance notification from the PHY layer of the UE. The MAC layer of the UE may trigger BFR (for example, start any one of random access procedures mentioned below) when receiving the beam failure instance notification certain times (for example, beamFailureInstanceMaxCount configured by RRC) or more until the timer expires.

When there is no notification from the UE or when receiving a certain signal (beam recovery request at step S104) from the UE, the base station may judge that the UE has detected beam failure.

At step S103, for beam recovery, the UE starts a search for a new candidate beam for use in new communication. The UE may select, by measuring a certain RS, the new candidate beam corresponding to the RS. The RS measured at step S103 may be referred to as a new candidate RS, an RS for new candidate beam identification, an NCBI-RS (New Candidate Beam Identification RS), an RS for new beam identification, a new beam identification RS, an NBI-RS, a CBI-RS (Candidate Beam Identification RS), a CB-RS (Candidate Beam RS), and the like. The NBI-RS may be the same as the BFD-RS, or may be different from the BFD-RS. Note that the new candidate beam may be referred to simply as a candidate beam or a candidate RS.

The UE may determine a beam corresponding to an RS satisfying a certain condition as the new candidate beam. The UE may determine a new candidate beam from among configured NBI-RSs, based on an RS with an L1-RSRP exceeding a threshold value, for example. Note that judgment standards (criteria) are not limited to the L1-RSRP. The L1-RSRP related to an SSB may be referred to as SS-RSRP. The L1-RSRP related to a CSI-RS may be referred to as CSI-RSRP.

Information related to the NBI-RS (for example, resources, numbers, the number of ports, precoding, and the like for the RS), information related to new beam identification (NBI) (for example, the above-mentioned threshold value), and the like may be configured (notified) for the UE by using higher layer signaling or the like. The information related to the new candidate RS (or NBI-RS) may be acquired based on information related to the BFD-RS. The information related to the NBI-RS may be referred to as information related to resources for NBI or the like.

Note that the BFD-RS, the NBI-RS, and the like may be interchangeably interpreted as a radio link monitoring reference signal (Radio Link Monitoring RS (RLM-RS)).

At step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

The BFRQ may be transmitted, for example, by using at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant (CG) PUSCH.

The BFRQ may include information of the new candidate beam / new candidate RS identified at step S103. Resources for the BFRQ may be associated with the new candidate beam. The information of the beam may be notified by using a beam index (BI), a port index of a certain reference signal, an RS index, a resource index (for example, a CSI-RS resource indicator (CRI)), an SSB resource indicator (SSBRI), or the like.

In Rel-15 NR, CB-BFR (Contention-Based BFR) that is BFR based on contention-based random access (CBRA) procedure and CF-BFR (Contention-Free BFR) that is BFR based on non-contention based random access (Contention-Free Random Access (CFRA)) procedure are under study. In the CB-BFR and the CF-BFR, the UE may transmit a preamble (also referred to as an RA preamble, a random access channel (Physical Random Access Channel (PRACH)), a RACH preamble, or the like) as the BFRQ by using PRACH resources.

In the CB-BFR, the UE may transmit a preamble randomly selected from one or a plurality of preambles. In contrast, in the CF-BFR, the UE may transmit a preamble allocated by the base station in a UE-specific manner. In the CB-BFR, the base station may allocate the same preamble for a plurality of UEs. In the CF-BFR, the base station may allocate a preamble in a UE-dedicated manner.

Note that the CB-BFR and the CF-BFR may be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may be referred to as CBRA for BFR. The CFRA-BFR may be referred to as CFRA for BFR.

In both the CB-BFR and the CF-BFR, information related to a PRACH resource (RA preamble) may be notified by higher layer signaling (RRC signaling or the like), for example. For example, the information may include information indicating a correspondence relationship between a detected DL-RS (beam) and the PRACH resource, and a different PRACH resource may be associated with each DL-RS.

At step S105, the base station that has detected the BFRQ transmits a response signal (which may be referred to as gNB response or the like) in response to the BFRQ from the UE. The response signal may include reconfiguration information about one or a plurality of beams (for example, DL-RS resource configuration information).

The response signal may be transmitted in, for example, a UE-common search space of a PDCCH. The response signal may be notified by using a PDCCH (DCI) cyclic-redundancy-check (CRC) scrambled by a UE identifier (for example, a cell-radio RNTI (C-RNTI)). The UE may judge at least one of a transmit beam and a receive beam to use, based on beam reconfiguration information.

The UE may monitor the response signal, based on at least one of a control resource set (CORESET) for BFR and a search space set for BFR.

With respect to the CB-BFR, when the UE receives a PDCCH corresponding to a C-RNTI related to the UE itself, it may be judged that contention resolution has succeeded.

With respect to processing at step S105, a period for the UE to monitor response from the base station (for example, gNB) to the BFRQ may be configured. The period may be referred to as, for example, a gNB response window, a gNB window, a beam recovery request response window, and the like. The UE may perform retransmission of the BFRQ when there is no gNB response detected in the window period.

At step S106, the UE may transmit, to the base station, a message indicating that beam reconfiguration has been completed. For example, the message may be transmitted on a PUCCH, or may be transmitted on a PUSCH.

Beam recovery success (BR success) may represent, for example, a case where step S106 has been reached. On the other hand, beam recovery failure (BR failure) may correspond to, for example, a case that BFRQ transmission has reached a certain number of times or a case that a beam failure recovery timer (Beam-failure-recovery-Timer) has expired.

In Rel. 15, it is supported to perform a beam recovery procedure for beam failure detected in an SpCell (PCell/PSCell) (for example, notification of BFRQ), by using a random access procedure. In contrast, in Rel. 16, it is supported to perform a beam recovery procedure for beam failure detected in an SCell (for example, notification of BFRQ), by using at least one of PUCCH (for example, scheduling request (SR)) transmission for BFR and a MAC CE (for example, UL-SCH) transmission for BFR.

For example, the UE may use two MAC CE-based steps to transmit information related to the beam failure. The information related to the beam failure may include information related to the cell in which the beam failure has been detected and information related to a new candidate beam (or a new candidate RS index).

{Step 1}

In a case where BF is detected, PUCCH-BFR (scheduling request (SR)) may be transmitted from the UE to a PCell/PSCell. Subsequently, a UL grant (DCI) for Step 2 below may be transmitted from the PCell/PSCell to the UE. When a MAC CE (or a UL-SCH) for transmitting information related to a new candidate beam is present in the case where beam failure is detected, Step 2 (for example, MAC CE transmission) may be performed with the omission of Step 1 (for example, PUCCH transmission).

{Step 2}

Subsequently, the UE may transmit information related to the cell in which the beam failure has been detected (failed) (for example, a cell index) and the information related to the new candidate beam to the base station (PCell/PSCell) via an uplink channel (for example, a PUSCH) by using a MAC CE. Thereafter, through the BFR procedure, the QCL of the PDCCH/PUCCH/PDSCH/PUSCH may be updated to a new beam after a certain period (for example, 28 symbols) from reception of a response signal from the base station.

Note that these step numbers are just numbers for description, and a plurality of steps may be combined with each other, or the order of the steps may be changed. Whether to perform the BFR may be configured for the UE by using higher layer signaling.

(Transmission Power Control for PUCCH)

In NR, the transmission power of a PUCCH is controlled based on a TPC command (also referred to as a value, an increase/decrease value, a correction value, an indication value, and the like) indicated by the value of a specific field (also referred to as a TPC command field, a first field, and the like) in DCI.

The TPC command field may be included in specific DCI (for example, DCI format 1_0/1_1/1_2/2_2). In Rel-16 NR, the TPC command field may have a bit length of two bits. A field indicating closed loop power control (for example, a closed loop indicator field) may be included in the specific DCI (for example, DCI format 2_2).

For example, by using an index l of a power control adjustment state, a PUCCH transmission power ($P_{PUCCH,b,f,c}(i,q_u,q_d,l)$) in a PUCCH transmission occasion (also referred to as a transmission period and the like) i for an active UL BWP b of a carrier f in a serving cell c may be expressed by Equation (1) below.

The power control adjustment state may be referred to as a PUCCH power control adjustment state, a first or second state, and the like.

The PUCCH transmission occasion i may be a certain period in which a PUCCH is transmitted and may be constituted of one or more symbols, one or more slots, or the like, for example.

[Math. 1]

(Equation 1)

$$P_{\text{PUCCH},b,f,c}(i, q_u, q_d, l) =$$

$$\min\left\{ \begin{array}{l} P_{\text{CMAX},f,c}(i), \\ P_{\text{O\_PUCCH},b,f,c}(q_u) + 10\log_{10}\left(2^{\mu} \cdot M_{\text{RB},b,f,c}^{\text{PUCCH}}(i)\right) + PL_{b,f,c}(q_d) + \Delta_{\text{F\_PUCCH}}(F) + \Delta_{\text{TF},b,f,c}(i) + g_{b,f,c}(i,l) \end{array} \right\}$$

In Equation (1), $P_{\text{CMAX},f,c}(i)$ denotes a transmission power (also referred to as a maximum transmission power, a maximum UE output power, and the like) of a user terminal configured for the carrier f in the serving cell c in the transmission occasion i, for example. $P_{\text{O\_PUCCH},b,f,c}(q_u)$ denotes a parameter of a target received power (also referred to as a parameter related to a transmission power offset, a transmission power offset P0, a target received power parameter, and the like, for example) configured for the active UL BWP b of the carrier f in the serving cell c in the transmission occasion i, for example.

$M_{\text{RB},b,f,c}^{\text{PUCCH}}(i)$ denotes the number of resource blocks (bandwidth) allocated to a PUCCH for the transmission occasion i in the active UL BWP b of the carrier f in the serving cell c and with subcarrier spacing $\mu$, for example. $PL_{b,f,c}(q_d)$ may denote a pathloss calculated by the user terminal by using an index $q_d$ of a reference signal for downlink BWP (pathloss reference RS, DL RS for pathloss measurement, PUCCH-PathlossReferenceRS) associated with the active UL BWP b of the carrier f in the serving cell c, for example.

$\Delta_{\text{F\_PUCCH}}(F)$ denotes a higher layer parameter given for each PUCCH format. $\Delta_{\text{TF},b,f,c}(i)$ denotes a transmission power adjustment component (offset) for UL BWP b of the carrier f in the serving cell c.

$g_{b,f,c}(i,l)$ denotes a value (for example, a power control adjustment state, an accumulated TPC command value, a value based on closed loop, a PUCCH power adjustment state) based on a TPC command of the power control adjustment state index l of the active UL BWP of the carrier f in the serving cell c with the transmission occasion i. For example, $g_{b,f,c}(i,l)$ may be expressed by Equation (2). l may be referred to as a closed loop index.
[Math. 2]

(Equation 2)

$$g_{b,f,c}(i,l) = g_{b,f,c}(i - i_0, l) + \sum_{m=0}^{C(C_i)-1} \delta_{\text{PUCCH},b,f,c}(m,l)$$

In Equation (2), $\delta_{\text{PUCCH},b,f,c}(m,l)$ denotes a TPC command value in a PUCCH transmission occasion m. $\sum_{m=0}^{C(C\_i)-1} \delta_{\text{PUCCH},b,f,c}(m,l)$ denotes the total of TPC command values in a set of TPC command values of a group C $(C_i)$ between $K_{\text{PUCCH}}(i - i_0) - 1$ symbols before a PUCCH transmission occasion $i - i_0$ and $K_{\text{PUCCH}}(i)$ symbols before the PUCCH transmission occasion i. Here, $i_0$ is an integer equal to or greater than 1. A TPC command value in a transmission occasion of a certain PUCCH may be a TPC command indicated by a TPC command field value in DCI (for example, DCI format 1_0 or 1_1) detected in the active UL BWP b of the carrier f in the serving cell c or may be a TPC command indicated by a TPC command field value in DCI (for example, DCI format 2_2) having CRC parity bits scrambled (CRC scrambled) with a specific Radio Network Temporary Identifier (RNTI) (for example, a TPC-PUCCH-RNTI).

When the UE is provided with information indicating use of two PUCCH power control adjustment states (twoPUCCH-PC-AdjustmentStates) and PUCCH spatial relation information (PUCCH-SpatialRelationInfo), l = {0,1} may be satisfied. When the UE is not provided with the information indicating use of two PUCCH power control adjustment states or the PUCCH spatial relation information, l = 0 may be satisfied.

When the UE obtains a TPC command value from DCI format 1_0 or 1_1 and the UE is provided with the PUCCH spatial relation information, the UE may obtain mapping (correspondence, association) between a PUCCH spatial relation information ID (pucch-SpatialRelationInfoId) value and a closed loop index (closedLoopIndex, power adjustment state index l), based on an index provided by a P0 ID for PUCCH (p0-PUCCH-Id in p0-Set in PUCCH-PowerControl in PUCCH-Config). When the UE receives an activation command including the value of the PUCCH spatial relation information ID, the UE may determine the value of the closed loop index providing the value l, through a link to a corresponding P0 ID for PUCCH.

When the UE is provided with a configuration of a $P_{\text{O\_PUCCH},b,f,c}(q_u)$ value for the corresponding PUCCH power adjustment state l for the active UL BWP b of the carrier f in the serving cell c by a higher layer, $g_{b,f,c}(k,l) = 0$ where k = 0, 1, ..., i is satisfied. When the UE is provided with PUCCH spatial relation information, the UE may determine the value l from the value $q_u$, based on the PUCCH spatial relation information associated with the P0 ID for PUCCH corresponding to $q_u$ and the closed loop index value corresponding to l.

$q_u$ may denote a P0 ID for PUCCH (p0-PUCCH-Id) indicating a P0 for PUCCH (P0-PUCCH) in a P0 for PUCCH set (p0-Set).

Note that Equations (1) and (2) are merely examples and are not restrictive. The user terminal only needs to control the transmission power of a PUCCH, based on at least one of the parameters illustrated in Equations (1) and (2), and an additional parameter(s) may be included or part of the parameters may be omitted. In Equations (1) and (2) above, the transmission power of a PUCCH is controlled for each active UL BWP of a certain carrier in a certain serving cell, but this is not restrictive. At least part of a serving cell, a carrier, a BWP, and a power control adjustment state may be omitted.

(Beam Update and Initialization of PUCCH Power Control)

In Rel. 15/16, for a PCell or a PSCell, a UE transmits a PUCCH in the same cell as that of PRACH transmission 28 symbols after the last symbol of the first PDCCH reception in a search space set provided by an RRC information element "recoverySearchSpaceId" in which the UE has detected a DCI format CRC-scrambled with a C-RNTI or an MCS-C-RNTI and until the UE receives an activation command for "PUCCH-SpatialRelationInfo" or is provided with "PUCCH-SpatialRelationInfo" for PUCCH resource.

In the PUCCH transmission, the UE uses the same spatial filter as that of immediately preceding (last) PRACH transmission to determine a power according to Equation 1 above by assuming $q_u = 0$, $q_d = q_{new}$, and l = 0.

For a PCell or a PSCell, the UE assumes the same antenna port quasi-co-location parameter as that associated with the index $q_{new}$ for PDCCH monitoring in a CORESET with index 0, 28 symbols after the last symbol of the first PDCCH reception in a search space set provided by an RRC information element "recoverySearchSpaceId" in which the UE has detected a DCI format CRC-scrambled with a C-RNTI or an MCS-C-RNTI.

For a PCell or a PSCell, when a BFR MAC CE is transmitted by using message 3 or message A in a CBRA procedure and a PUCCH resource is provided by using "PUCCH-SpatialRelationInfo," the UE transmits a PUCCH in the same cell as that of PRACH transmission 28 symbols after the last symbol of PDCCH reception determining completion of the CBRA procedure.

In the PUCCH transmission, the UE uses the same spatial filter as that of the immediately preceding PRACH transmission, to determine a power according to Equation 1 above by assuming $q_u = 0$, $q_d = q_{new}$, and l = 0. Here, $q_{new}$ denotes an SS/PBCH block index selected for the immediately preceding PRACH transmission.

The UE can provide a configuration for PUCCH transmission with a link recovery request (LRR) by "schedulingRequestID-BFR-SCell-r16."

28 symbols after the last symbol of reception of a PDCCH with a DCI format for scheduling transmission of a PUSCH having the same HARQ process number as that of the first PUSCH transmission and including a toggled new data indicator (NDI) field, if a corresponding index (indexes) $q_{new}$ is present, the UE uses the same antenna port quasi-co-location parameter(s) as that/those associated with the index/indexes, to monitor PDCCHs in all the CORESETs in an SCell(s) indicated by a MAC CE.

28 symbols after the last symbol of reception of a PDCCH with a DCI format for scheduling transmission of a PUSCH having the same HARQ process number as that of the first PUSCH transmission and including a toggled NDI field, if "PUCCH-SpatialRelationInfo" is provided for a PUCCH, and a PUCCH with LRR is not transmitted or is transmitted in a PCell or a PSCell, and a PUCCH-SCell is included in an SCell indicated by a MAC CE, the UE uses the power determined according to Equation 1 above by assuming $q_u = 0$, $q_d = q_{new}$, and l = 0 and uses the same spatial domain filter as a spatial domain filter corresponding to $q_{new}$ for reception of a periodic CSI-RS or an SS/PBCH block, to transmit the PUCCH in the PUCCH-SCell.

Here, a configuration of subcarrier spacing (SCS) with 28 symbols is the configuration of the smallest SCS among the configuration of SCS of an active DL BWP for PDCCH reception and an active DL BWP(s) of at least one SCell.

(Analysis)

BFR involves high resource overhead and latency. From the viewpoint of an NW, it is preferable to prevent a UE from being in a state of beam failure and maintain beam connection as much as possible.

To enable this, as one measure, it is considered to frequently perform triggering of beam reporting, for a base station to indicate a new beam before the UE enters a state of beam failure. However, this method causes high resource overhead.

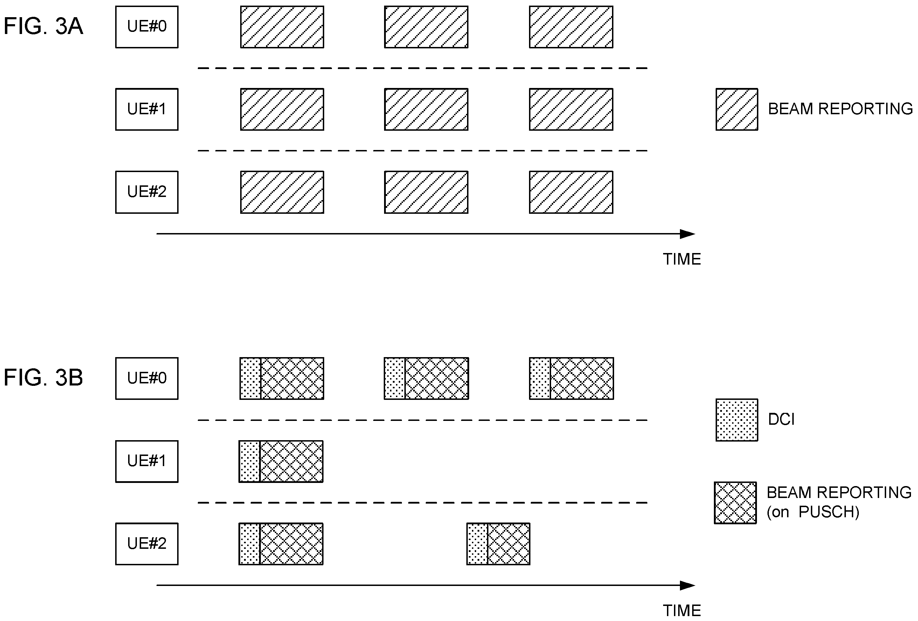

For example, it is considered that one or more UEs perform periodic (P) / semi-persistent (SP) beam reporting (refer to FIG. 3A). In FIG. 3A, UE #0 to UE #2 perform periodic beam reporting. A beam report may be transmitted by using a PUCCH/PUSCH. This beam reporting causes high resource overhead. For most UEs, such frequent beam reporting is not needed.

Meanwhile, for example, it is considered that one or more UEs perform aperiodic (A) beam reporting (refer to FIG. 3B). In FIG. 3B, UE #0 to UE #2 perform aperiodic beam reporting triggered by DCI. In aperiodic beam reporting, a base station can frequently perform triggering of beam reporting only on a necessary UE(s). However, frequent triggering of beam reporting is difficult when the capacity/blockage of a PDCCH is taken into account. Blockage of a PDCCH normally restricts the maximum number of pieces of DCI which the base station can transmit per slot.

To address this, for Rel. 17 or later versions, introduction of beam reporting triggered based on an event (Event triggered beam reporting) is under study. When a specific event has occurred, a UE performs beam reporting.

However, a condition of the event and a method of beam reporting based on an event are not clear. Unless a condition of the event and a method of beam reporting based on an event are clear, this may cause deterioration in communication throughput / increase in overhead.

Thus, the inventors of the present invention came up with the idea of a condition of the event and a method of beam reporting based on an event.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted.

In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a pool, a set, a group, a list, and a candidate may be interchangeably interpreted.

In the present disclosure, a DMRS, a DMRS port, and an antenna port may be interchangeably interpreted.

In the present disclosure, a special cell, an SpCell, a PCell, and a PSCell may be interchangeably interpreted.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state / QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a CSI-RS for tracking, a CSI-RS including TRS information (higher layer parameter trs-Info), an NZP CSI-RS resource in an NZP CSI-RS resource set including TRS information, an NZP-CSI-RS resource in an NZP-CSI-RS resource set including a plurality of NZP-CSI-RS resources with the same antenna port, and a TRS resource may be interchangeably interpreted. In the present disclosure, a CSI-RS resource, a CSI-RS resource set, a CSI-RS resource group, and an information element (IE) may be interchangeably interpreted.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted. A panel Identifier (ID) and a panel may be interchangeably interpreted. In the present disclosure, a TRP ID, a TRP-related ID, a CORESET pool index, location of one TCI state (ordinal number, a first TCI state or a second TCI state) of two TCI states corresponding to one codepoint of a field in DCI, and a TRP may be interchangeably interpreted.

In the present disclosure, a TRP, a transmission point, a panel, a DMRS port group, a CORESET pool, and one of two TCI states associated with one codepoint in a TCI field may be interpreted interchangeably.

In the present disclosure, CORESET 0, a CORESET having index 0, and a common CORESET may be interchangeably interpreted.

In the present disclosure, Radio Resource Management (RRM) reporting may be interpreted as layer 3 (L3) measurement reporting and vice versa.

In the present disclosure, DL TCI, DL only TCI, separate DL only TCI, DL common TCI, DL unified TCI, common TCI, and unified TCI may be interchangeably interpreted. In the present disclosure, UL TCI, UL only TCI, separate UL only TCI, UL common TCI, UL unified TCI, common TCI, and unified TCI may be interchangeably interpreted.

In the present disclosure, a separate TCI state being configured/indicated/updated, a DL only TCI state being configured/indicated, a UL only TCI state being configured/indicated/updated, and DL and UL TCI states being configured/indicated/updated may be interchangeably interpreted.

In the present disclosure, a case of a joint TCI pool and a case where a joint TCI pool is configured may be interchangeably interpreted. In the present disclosure, a case of a separate TCI pool and a case where a separate TCI pool is configured may be interchangeably interpreted.

In the present disclosure, beam reporting based on an event, beam reporting based on occurrence of an event, beam reporting triggered by an event, and event triggered beam reporting (Event triggerd beam reporting) may be interchangeably interpreted.

(Radio Communication Method)

<First Embodiment>

In a first embodiment, a condition of an event related to beam reporting will be described.

<<Embodiment 1-1>>

One or more events that trigger beam reporting may be defined for a UE.

The event(s) may be at least one of events to be described below:

- event (1): a serving beam deteriorates to be smaller than a specific threshold value (which may be referred to as event A2, for example),
- event (2): a neighbor beam improves to be larger than a value obtained by adding an offset to a serving beam (which may be referred to as event A3, for example),
- event (3): a neighbor beam improves to be larger than a specific threshold value (which may be referred to as event A4, for example)
- event (4): a serving beam deteriorates to be smaller than a first threshold value while a neighbor beam improves to be larger than a second threshold value (which may be referred to as event A5, for example),
- event (5): a neighbor beam improves to be higher than a value obtained by adding an offset to a serving beam (which may be referred to as event A6, for example), and
- event (6): an interference value exceeds a specific threshold value (which may be referred to as event I1, for example).

Note that reference signs related to events in the present disclosure are merely examples, and alphabets and numbers to be described are not limited to these.

The UE may trigger beam reporting, based on at least one of the above-described events. The beam reporting may be aperiodic layer 1 (L1) beam reporting.

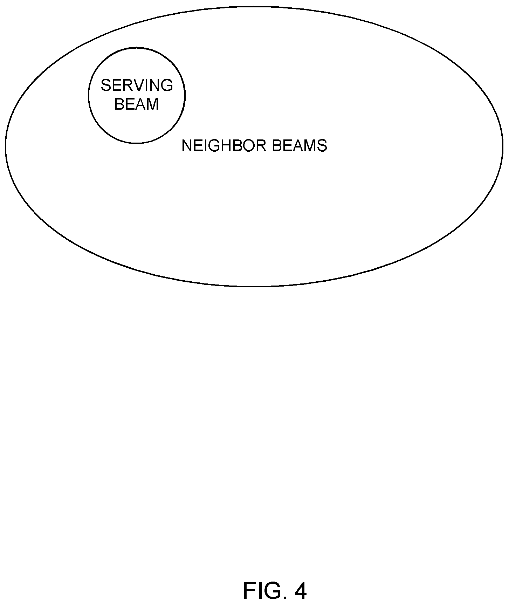

In the present disclosure, a serving beam may be a specific beam different from a neighbor beam to be described below (refer to FIG. 4). In the present disclosure, a serving beam may mean a current TCI state / spatial relation indicated/activated for a specific channel/signal in an existing (Rel-15/16) TCI state framework. A serving beam may mean a current joint TCI state / separate TCI state indicated/activated in a common/unified TCI state framework defined in Rel. 17 or later versions. A serving beam may mean a beam most newly (recently) reported as an L1 RSRP/SINR beam report.

In the present disclosure, a neighbor beam may mean a configured/activated TCI state / spatial relation / join TCI state / separate TCI state different from a serving beam.

At least one of the above-described events may correspond to an event in existing RRM reporting (defined in Rel. 15/16).

For example, for event (1) above, an entering condition may be that the sum of a measurement result of a serving beam and a specific hysteresis parameter is smaller than a specific threshold value. For event (1) above, a leaving condition may be that the difference between a measurement result of the serving beam and the specific hysteresis parameter is larger than the specific threshold value.

For example, for event (2) above, an entering condition may be that a value obtained by subtracting a specific hysteresis parameter from the sum of a measurement result of a neighbor beam, a measurement object specific offset for the neighbor beam, and a neighbor beam specific offset is larger than the sum of a measurement result of a specific beam, a measurement object specific offset for the specific beam, a specific beam specific offset, and an offset related to an event. For event (2) above, a leaving condition may be that the sum of a measurement result of the neighbor beam, the measurement object specific offset for the neighbor beam, the neighbor beam specific offset, and the specific hysteresis parameter is smaller than the sum of a measurement result of the specific beam, the measurement object specific offset for the specific beam, the specific beam specific offset, and the offset related to an event.

For example, for event (3) above, an entering condition may be that a value obtained by subtracting a specific hysteresis parameter from the sum of a measurement result of a neighbor beam, a measurement object specific offset for the neighbor beam, and a neighbor beam specific offset is larger than a specific threshold value. For event (3) above, a leaving condition may be that the sum of a measurement result of the neighbor beam, the measurement object specific offset for the neighbor beam, the neighbor beam specific offset, and the specific hysteresis parameter becomes is than the specific threshold value.

For example, for event (4) above, a first entering condition may be that the sum of a measurement result of a serving beam and a specific hysteresis parameter is smaller than a first threshold value, and a second entering condition may be that a value obtained by subtracting the specific hysteresis parameter from the sum of a measurement result of a neighbor beam, a measurement object specific offset for the neighbor beam, and a neighbor beam specific offset is larger than a second threshold value.

For event (4) above, a first leaving condition may be that the difference between a measurement result of the serving beam and the specific hysteresis parameter is larger than the first threshold value, and a second leaving condition may be that the sum of a measurement result of the neighbor beam, the measurement object specific offset for the neighbor beam, the neighbor beam specific offset, and the specific hysteresis parameter is smaller than the second threshold value.

For example, for event (5) above, an entering condition may be that a value obtained by subtracting a specific hysteresis parameter from the sum of a measurement result of a neighbor beam and a neighbor beam specific offset is larger than the sum of a measurement result of a serving beam, a serving beam specific offset, and an offset related to an event. For event (5) above, a leaving condition may be that the sum of a measurement result of the neighbor beam, the neighbor beam specific offset, and the specific hysteresis parameter is smaller than the sum of a measurement result of the serving beam, the serving beam specific offset, and the offset related to an event.

For example, for event (6) above, an entering condition may be that a value of interference for a serving beam is greater than a specific threshold value. For event (6) above, a leaving condition may be that a value of interference for the serving beam is smaller than the specific threshold value.

In the present disclosure, at least one of a threshold value (specific/first/second threshold value), a measurement result, an offset, and a hysteresis parameter may be calculated (or expressed) in a specific unit (for example, at least one of dB and dBm).

In the present disclosure, at least one of a threshold value (specific/first/second threshold value), an offset, and a hysteresis parameter may be configured for the UE by using higher layer signaling. An offset in the present disclosure may be defined in a specification in advance.

Note that a "measurement result" in the first embodiment may be, for example, at least one of an L1-RSRP, an L1-RSRQ, an L1-SINR, an L1-SNR, and the like or a corresponding L3 measurement result (for example, an L3-RSRP) as already described. In the following "L1-," "L3-," and the like may be omitted.

<<Embodiment 1-2>>

One or more serving beams may be configured/indicated for the UE.

One serving beam may be configured/indicated for the UE (Embodiment 1-2-1).

The one serving beam may be a beam (TCI state) corresponding to a specific CORESET. The specific CORESET may be, for example, a CORESET having the lowest (or highest) CORESET ID.

When use of a common TCI state is configured for the UE, the one serving beam may be one indicated/activated joint TCI state / DL separate TCI state.

The UE may compare the received power / reception quality of the one serving beam and the received power / reception quality of another beam (neighbor beam), to judge an occurrence of at least one of the above-described events.

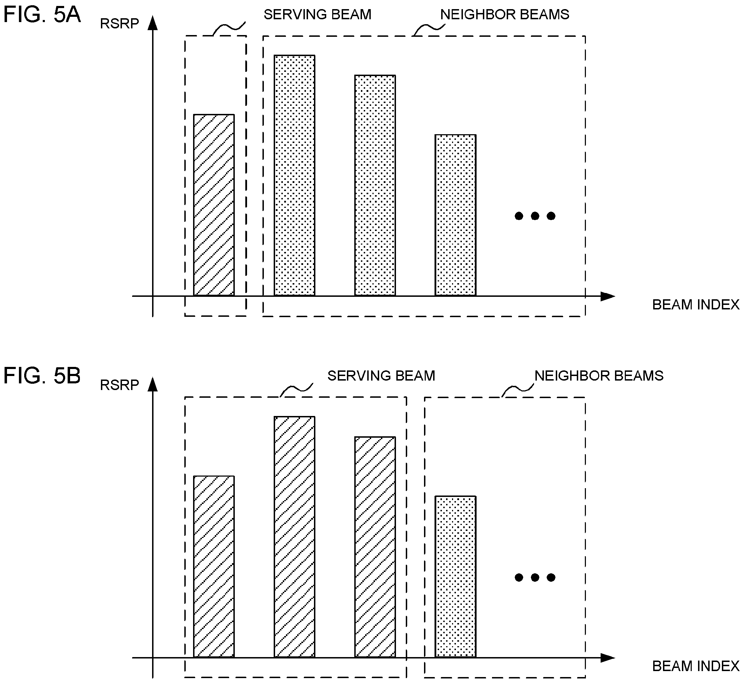

FIG. 5A is a diagram to show an example of comparison of beams according to Embodiment 1-2. As shown in the example in FIG. 5A, one serving beam and other neighbor beams are configured for the UE. The UE compares the one serving beam and the other neighbor beams to judge an occurrence of an event. As the received power of each beam in the example in FIG. 5A, an RSRP is used.

Note that a specific offset may be used for the comparison between the serving beam and the neighbor beams. For example, a value obtained by adding the specific offset to a measurement result of the serving beam and a measurement result of each neighbor beam may be compared. By thus using an offset, beam switching can be prevented from occurring excessively.

The specific offset may be configured/notified for the UE by using higher layer signaling or may be defined in a specification in advance.

A plurality of serving beams may be configured/indicated for the UE (Embodiment 1-2-2).

The plurality of serving beams may be beams (TCI states) corresponding to specific CORESETs. The specific CORESETs may be, for example, CORESETs corresponding to a specific number of CORESET IDs or may be all the CORESETs configured for the UE. The plurality of serving beams may be a plurality of or all the active TCI states for PDSCH.

When use of a common TCI state is configured for the UE, the plurality of serving beams may be joint TCI states / DL separate TCI states configured/notified by using higher layer signaling (for example, RRC signaling / a MAC CE).

The UE may compare the received power / reception quality of at least one of the plurality of serving beams and the received power / reception quality of another beam (neighbor beam), to judge an occurrence of at least one of the above-described events.

For example, the beam having the lowest (or highest) received power / reception quality among the plurality of serving beams and each neighbor beam may be compared. For example, the average value of the received powers / reception qualities of the plurality of serving beams may be calculated, and the calculated value and the received power / reception quality of each neighbor beam may be compared.

FIG. 5B is a diagram to show another example of the comparison of beams according to Embodiment 1-2. As shown in the example in FIG. 5B, three serving beams and other neighbor beams are configured for the UE. The UE compares the three serving beam and the other neighbor beams to judge an occurrence of an event. As the received power of each beam in the example in FIG. 5B, an RSRP is used.

Note that a specific offset may be used for the comparison between the serving beam and the neighbor beams. For example, a value obtained by adding the specific offset to a measurement result of each serving beam and a measurement result of each neighbor beam may be compared. By thus using an offset, beam switching can be prevented from occurring excessively.

The specific offset may be configured/notified for the UE by using higher layer signaling or may be defined in a specification in advance.

The UE may determine one or more serving beams (Embodiment 1-2-3).

For example, the UE may determine, as a serving beam(s), X (where X is an integer equal to or larger than 1) beam(s) from one having the highest received power / reception quality among the plurality of beams thus measured.

X above may be configured by higher layer signaling, may be defined in a specification in advance, or may be determined based on reporting of UE capability information.

According to Embodiment 1-1/1-2 above, the NW can suppress an increase in frequency of beam reporting by the UE.

Since the UE performs beam reporting when an event of a specific condition has occurred, only the necessary UE can perform highly frequent beam reporting, which can suppress an increase in resource overhead.

<<Embodiment 1-3>>

The base station may configure periodic/semi-persistent/aperiodic beam reporting (first beam reporting) for a plurality of UEs. In addition, the base station may configure periodic/semi-persistent beam reporting (second beam reporting) in shorter periodicity (or at higher frequency) than that of the first beam reporting, for a UE(s) for which an event occurs at a frequency equal to or higher than (exceeding) a specific threshold value.

In the present disclosure, the first beam reporting may be beam reporting not based on an event. In the present disclosure, the second beam reporting may be event triggered beam reporting described in the first embodiment.

An event occurring at a frequency equal to or higher than the specific threshold value may mean an event occurring a specific number of times or more in a specific number of (integer equal to or larger than 1) time units (for example, units of slot/symbol).

Information related to at least one of reporting periodicity, a period, the number of times related to beam reporting may be configured/notified/indicated for the UE by using higher layer signaling / physical layer signaling. Information related to first beam reporting and information related to second beam reporting may be configured/notified/indicated separately.

With this, the base station can judge a terminal requiring highly frequent beam reporting, based on the frequency of occurrence of an event.

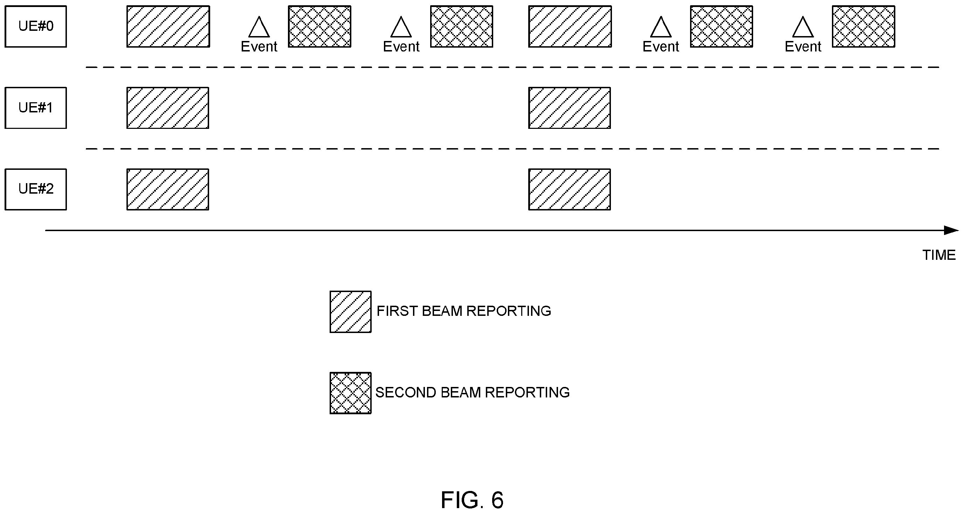

FIG. 6 is a diagram to show an example of beam reporting according to Embodiment 1-3. In FIG. 6, first beam reporting and second beam reporting are configured for UE #0 to UE #2. As shown in FIG. 6, the base station may configure the first beam reporting / second beam reporting in shorter periodicity for UE #0 for which an event of the second beam reporting occurs highly frequently (at a frequency equal to or higher than a certain threshold value).

The base station may change the periodicity of the second beam reporting (for example, configure longer periodicity), based on the frequency of occurrence of an event related to the second beam reporting. For example, when an event related to the second beam reporting occurs at a low frequency (frequency equal to or lower than a certain threshold value) in the UE, the base station may configure the second beam reporting in longer periodicity for the UE. With this, load of checking occurrence of an event by the UE can be reduced.

The UE may transmit information/request for changing the periodicity of the first beam reporting / second beam reporting to the NW, based on the frequency of occurrence of an event. The information/request may be transmitted by using RRC signaling / a MAC CE / UCI.

According to the first embodiment above, an event for performing beam reporting can be appropriately defined.

<Second Embodiment>

In a second embodiment, operation of the UE / base station after event occurrence will be described.

<<Embodiment 2-1>>

The UE may transmit a PRACH when a specific event has occurred (when an entering condition of a specific event as those described in Embodiment 1-1 is satisfied). In other words, in Embodiment 2-1, event triggered beam reporting may correspond to a PRACH.

A PRACH occasion/resource of a PRACH to be transmitted and information related to a beam to be changed to (new beam) may be associated. The UE may use the PRACH to transmit the information related to the new beam to the NW.

A plurality of PRACH occasions/resources may be configured for the UE. The UE may select a PRACH occasion/resource from the plurality of PRACH occasions/resources to transmit/report information related to the new beam.

A PRACH occasion/resource for beam reporting and a PRACH occasion/resource for different usage (for example, BFR) may be configured separately. This can be preferably used in CFRA. With this, the NW can judge that beam reporting based on an event is received, based on a PRACH occasion/resource.

A PRACH occasion/resource for beam reporting and a PRACH occasion/resource for different usage (for example, BFR) may be in common. This can be preferably used in CBRA.

With this, the NW cannot judge that beam reporting based on an event is received, based on a PRACH occasion/resource. Hence, the UE may transmit message 3 / message A including specific information. The NW may judge that beam reporting based on an event is received, based on the specific information.

The specific information may be included in a MAC CE. The MAC CE may be referred to as a MAC CE for event triggered beam reporting. The MAC CE may be a MAC CE described in Embodiment 2-2 below or may be a different MAC CE (for example, a MAC CE defined in Rel. 17 or later versions).

<<Embodiment 2-2>>

In Embodiment 2-2, event triggered beam reporting may correspond to a MAC CE. A MAC CE including specific information for notifying beam reporting based on an event (which may be referred to as a MAC CE for event triggered beam reporting, a first MAC CE, and the like below) may be an existing MAC CE (defined in Rel. 15/16).

In Embodiment 2-2, a first MAC CE may have the same configuration as a MAC CE for BFR. The MAC CE for BFR may include at least one of a BFR MAC CE and a Truncated BFR MAC CE.

The first MAC CE may include a plurality of fields. The plurality of fields may include at least two of a field indicating beam failure detection for SpCell (SP field, described as "SP"), a field indicating beam failure detection for an SCell having a serving cell index (ID) i ($C_i$ field, described as "$C_i$"), a field indicating the presence of a candidate RS ID field in the same octet (AC field, described as "AC"), a candidate RS ID field, a reserved bit field (R field, described as "R"), and a field indicating the value of received power / reception quality (for example, an RSRP).

The UE may use a specific field (for example, at least one of an R field and an SP field) to notify whether the first MAC CE is a MAC CE for BFR or a MAC CE for event triggered beam reporting.

Notifying whether the first MAC CE is a MAC CE for BFR or a MAC CE for event triggered beam reporting may be configured for the UE by using higher layer signaling (for example, RRC signaling).

The UE may set the value of a specific (for example, first) specific field included in the first MAC CE at a first value (for example, 0 (or 1)) to thereby indicate that the MAC CE is a MAC CE for BFR.

The UE may set the value of a specific (for example, first) specific field included in the first MAC CE at a second value (for example, 1 (or 0)) to thereby indicate that the MAC CE is a MAC CE for event triggered beam reporting.

At least one of when a plurality of candidate RS IDs are reported for one cell and when values of a plurality of received powers / reception qualities (for example, RSRPs) are reported for one cell, the UE may use a plurality of the above-described MAC CEs.

The UE may receive UL grant (DCI) for the first MAC CE. When the UE does not receive UL grant for the first MAC CE, the UE may transmit an SR to the NW to request UL grant. When no resource for SR is configured, the UE may transmit a PRACH as defined in Rel. 15/16.

The first MAC CE may include pieces of information of a plurality of cells. In this case, an octet including a $C_i$ field may be set.

The first MAC CE may include only information of one cell (for example, the cell itself in which the MAC CE is transmitted). In this case, an octet including a $C_i$ field need not be set (may be omitted).

At least one candidate RS ID field may be present in a MAC CE for event triggered beam reporting. In this case, the first AC field may be changed to R bits, or the values of the AC fields may be ignored.

No candidate RS ID field may be present in a MAC CE for BFR

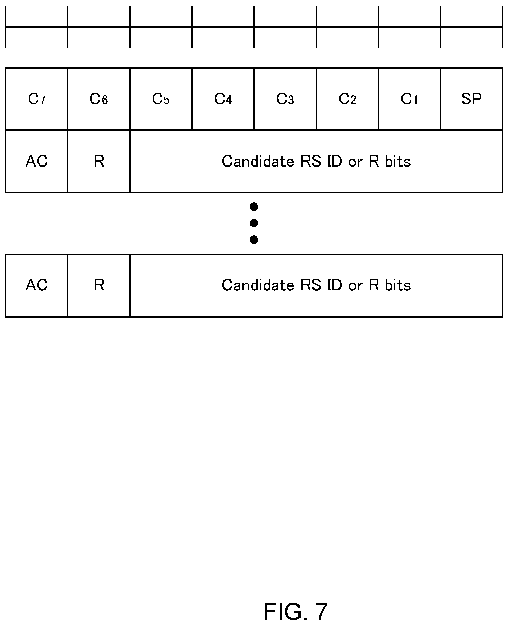

FIG. 7 is a diagram to show an example of a configuration of the MAC CE according to Embodiment 2-2. In FIG. 7, the UE uses and transmits the MAC CE to the NW in relation to execution of event triggered beam reporting.

The MAC CE illustrated in FIG. 7 has the same configuration as a MAC CE for BFR. Specifically, the MAC CE includes an SP field, a $C_i$ field (i is an integer from 1 to 7), a candidate RS ID field, an AC field, and an R field.

In FIG. 7, the UE may use the SP field included in the MAC CE to indicate that the MAC CE is a MAC CE for event triggered beam reporting. The UE may use the first R field included in the MAC CE to indicate that the MAC CE is a MAC CE for event triggered beam reporting.

A field for reporting a plurality of candidate RS IDs (and the values of corresponding received powers / reception qualities (for example, RSRPs)) may be added to the MAC CE for event triggered beam reporting.

The number (maximum number) of candidate RS IDs to be reported by the UE may be configured by using higher layer signaling. The UE may determine a smaller number of candidate RS IDs than the configured maximum number.

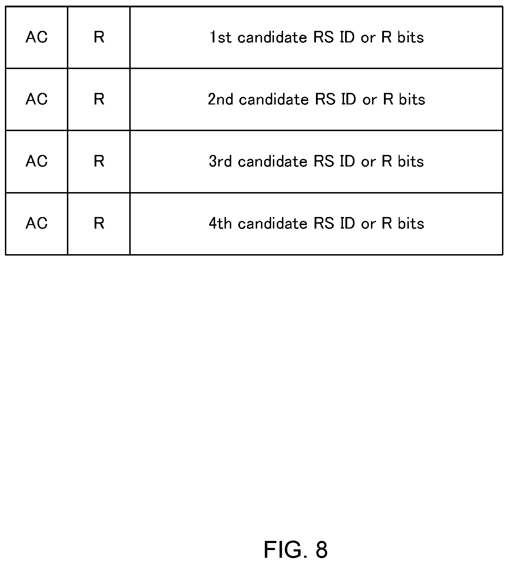

FIG. 8 is a diagram to show another example of the configuration of the MAC CE according to Embodiment 2-2. As shown in FIG. 8, fields for reporting four candidate RS IDs (and the values of corresponding received powers / reception qualities (for example, RSRPs)) (first to fourth candidate RS ID fields) are added to the first MAC CE. The UE may report four candidate RS IDs (and RSRP values) at maximum each having a received power / reception quality exceeding (equal to or higher than) a specific threshold value.

R fields shown in FIG. 8 may each indicate whether the next octet is present. With this, signaling overhead of a MAC CE can be reduced.

The MAC CE including the fields shown in FIG. 8 may include pieces of information of a plurality of cells. In this case, an octet including a $C_i$ field may be set.

The MAC CE including the fields shown in FIG. 8 may include only information of one cell (for example, the cell itself in which the MAC CE is transmitted). In this case, an octet including a $C_i$ field need not be set (may be omitted).

At least one candidate RS ID field may be present in the MAC CE including the fields shown in FIG. 8. In this case, the first AC field may be changed to R bits, or the values of the AC fields may be ignored.

Note that event triggered beam reporting may be CSI reporting.

According to the second embodiment above, operation of the UE / base station for beam reporting based on event occurrence after occurrence of an event can be appropriately controlled.

<Third Embodiment>

In a third embodiment, update/change of a beam state in beam reporting based on occurrence of an event will be described.

In the following, first timing may be assumed as at least one of cases after the completion of a CFRA/CBRA procedure and after the completion of transmission of a first MAC CE.

In the following, second timing may be assumed as at least one of cases where a signal corresponding to a BFR response is received, DCI is received in a dedicated search space, message 4 (or a signal corresponding to message 4) is received, and DCI corresponding to ACK (acknowledgement) for a PUSCH in a random access procedure is received.

When the first timing is satisfied and after the elapse of a specific period, the UE / base station may update the state of a beam (which may be referred to as a beam state / beam assumption).

When the first timing is satisfied and after the elapse of a specific period, the UE / base station may reset/update a parameter/state related to transmission power control of a UL channel/signal (for example, a PUSCH/PUCCH/SRS).

When the first timing and the second timing are satisfied and after the elapse of a specific period, the UE / base station may update the state of a beam.

When the first timing and the second timing are satisfied and after the elapse of a specific period, the UE / base station may reset/update a parameter/state related to transmission power control of a UL channel/signal (for example, a PUSCH/PUCCH/SRS).

The update of a beam state may be performed for the beam of a specific channel/signal (for example, a PDCCH/PUCCH). The update of a beam state may be performed for the beams of a plurality of channels/signals (for example, all the channels/signals). The update of a beam state may be performed for the beam of a plurality of channels/signals (for example, all the channels/signals excluding a CSI-RS/SRS).

When the first timing is satisfied and after the elapse of a specific period, the base station need not update the state of a beam. When the first timing and the second timing are satisfied and after the elapse of a specific period, the base station need not update the state of a beam.

For example, the update of the state of a beam in the base station may be performed when a (explicit) response to event triggered beam reporting is performed. The UE may assume to perform the update of a beam state when the UE receives a (explicit) response to event triggered beam reporting. The occurrence of the second timing may mean completion of reception of event triggered beam reporting by the base station. "Response" in the third embodiment may correspond to at least one of a signal/information received at the second timing.

Completion of reception of event triggered beam reporting by the base station may mean permission/approval of change to a beam reported by using the event triggered beam reporting.

Two states including a state where the change to the beam reported by using the event triggered beam reporting after completion of reception of the event triggered beam reporting by the base station is not permitted/approved (first state) and a state where the change to the beam reported by using the event triggered beam reporting after completion of reception of the event triggered beam reporting by the base station is permitted/approved (second state) may be defined.

The UE may receive response (channel/signal in which the response is transmitted) corresponding to each of the two states. The UE may judge whether to update/change the beam state of the specific channel/signal after the response, based on the received response.

For example, when the UE has received a response indicating the first state, the UE may judge not to update/change the beam state of the specific channel/signal (for example, all the channels/signals) after the reception of the response.

For example, when the UE has received a response indicating the second state, the UE may judge to update/change the beam state of the specific channel/signal (for example, all the channels/signals) after the reception of the response.

The UE may receive a response corresponding to each of the two states by using different CORESETs / search spaces. The UE may receive a response corresponding to each of the two states by using the same (or a common) CORESET / search space and different pieces of DCI. The different pieces of DCI may mean at least one of pieces of DCI different in at least one included field, pieces of DCI having different DCI formats, and pieces of DCI CRC-scrambled with different RNTIs.

Note that, this embodiment may be applied only to a case where the UE uses message 3 / message A to notify/indicate that a MAC CE to transmit is a MAC CE for event triggered beam reporting. With this, the NW can judge which usage a CBRA procedure is used.

According to the third embodiment above, update/change of a beam state in beam reporting based on occurrence of an event can be appropriately controlled.

<Fourth Embodiment>

In a fourth embodiment, operations of existing beam reporting (defined in Rel. 15/16 or previous versions) (which may be referred to as first beam reporting) and beam reporting based on occurrence of an event (which may be referred to as second beam reporting) will be described.

The UE may control execution of the first beam reporting and the second beam reporting, based on at least one of Embodiments 4-1 to 4-5 to be described below.

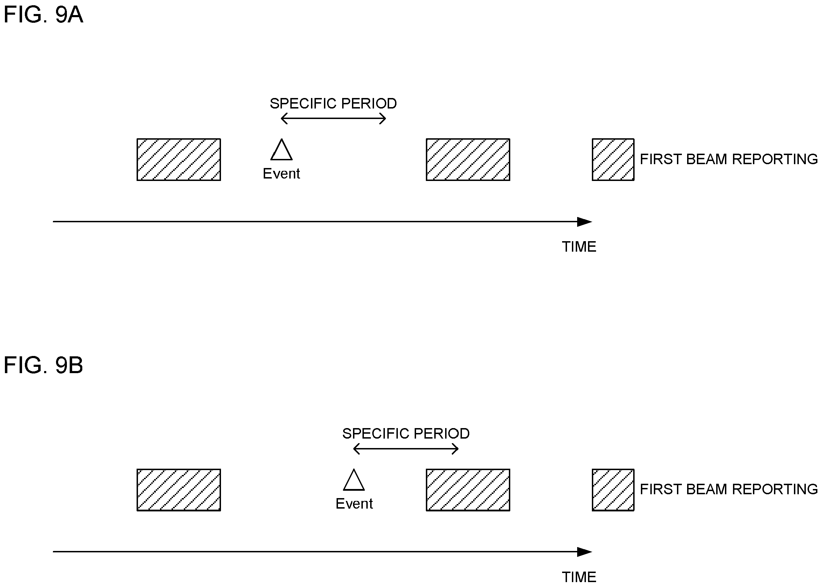

FIGS. 9A and 9B are diagrams to show examples of a timeline of event occurrence according to the fourth embodiment. In FIGS. 9A and 9B, it is configured to perform the first beam reporting. In FIG. 9A, the first beam reporting is not performed within a specific period from occurrence of an event. In contrast, in FIG. 9B, the first beam reporting is performed within a specific period from occurrence of an event.

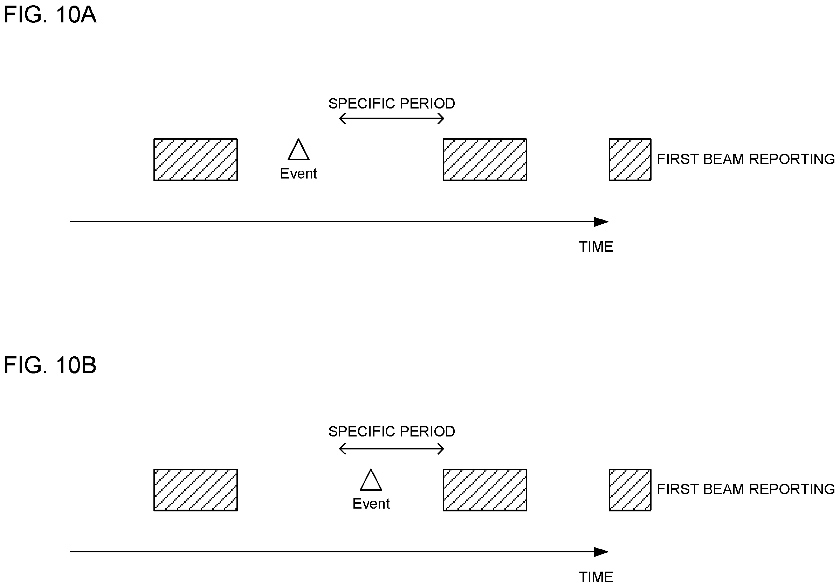

FIGS. 10A and 10B are diagrams to show other examples of a timeline of event occurrence according to the fourth embodiment. In FIGS. 10A and 10B, it is configured to perform the first beam reporting. In FIG. 10A, no event occurs within a specific period before the first beam reporting. In contrast, in FIG. 10B, an event occurs within the specific period before the first beam reporting.

Embodiments 4-1 to 4-5 below will describe a case where the first beam reporting is performed within a specific period from occurrence of an event as shown in FIG. 9B but may also be appropriately applied to a case where an event occurs within a specific period before the first beam reporting as shown in FIG. 10B.

When it is configured/indicated to perform the first beam reporting in a specific period after occurrence of an event, the UE may perform the first beam reporting without performing the second beam reporting (Embodiment 4-1).

When it is configured/indicated to perform the first beam reporting within a specific period from occurrence of an event, the UE may perform the second beam reporting without performing the first beam reporting (Embodiment 4-2).

When it is configured/indicated to perform the first beam reporting within a specific period from occurrence of an event, the UE may perform both the first beam reporting and the second beam reporting (Embodiment 4-3).

When it is configured/indicated to perform the first beam reporting within a specific period from occurrence of an event, the UE may perform at least one of the first beam reporting and the second beam reporting, based on a specific condition (Embodiment 4-4).

In Embodiment 4-4, the specific condition may be a condition based on information reported by using the second beam reporting. For example, a new candidate beam reported by using the second beam reporting is included in (or the same as) the first beam reporting, the UE may perform the first beam reporting and need not perform the second beam reporting. Otherwise, the UE may perform the second beam reporting or may perform both the first beam reporting and the second beam reporting.

When it is configured/indicated to perform the first beam reporting within a specific period from occurrence of an event, the UE may perform at least one of the first beam reporting and the second beam reporting, based on the configuration of higher layer signaling (Embodiment 4-5).

In Embodiment 4-5, for example, when it is configured by using higher layer signaling, the UE may perform the second beam reporting or may perform both the first beam reporting and the second beam reporting. Otherwise, the UE may perform the first beam reporting and need not perform the second beam reporting.

According to Embodiment 4-5, by performing the second beam reporting by using a MAC CE, a larger amount of information can be included for transmission to the NW.

Note that the specific period in this embodiment may be defined in a specification in advance or may be configured/notified for the UE by using higher layer signaling.

According to the fourth embodiment above, execution of existing beam reporting (defined in Rel. 15/16 or previous versions) and execution of beam reporting based on occurrence of an event can be appropriately controlled.

<Fifth Embodiment>

A higher layer parameter (RRC IE) / UE capability corresponding to the function (characteristics, feature) in at least one of the plurality of above embodiments may be defined. The UE capability may indicate to support this function.

The UE configured with the higher layer parameter corresponding to the function (enabling the function) may perform the function. The "UE not configured with the higher layer parameter corresponding to the function does not perform the function (for example, follows Rel. 15/16)" may be defined.

The UE that has reported the UE capability indicating support of the function may perform the function. The "UE that has not reported the UE capability indicating support of the function does not perform the function (for example, follows Rel. 15/16)" may be defined.

When the UE reports the UE capability indicating support of the function and a higher layer parameter corresponding to the function is configured, the UE may perform the function. "When the UE does not report the UE capability indicating support of the function or when the UE is not configured with the higher layer parameter corresponding to the function, the UE does not perform the function (for example, follows Rel. 15/16)" may be defined.

The UE capability may indicate whether the UE supports this function.

The UE capability may be defined depending on whether event triggered beam reporting is supported.

The UE capability may be defined depending on whether a PRACH based on event triggered beam reporting is supported.

The UE capability may be defined depending on whether a MAC CE based on event triggered beam reporting (MAC CE transmitted on a PUSCH) is supported.

The UE capability may be defined depending on whether a new MAC CE (MAC CE transmitted on a PUSCH) based on event triggered beam reporting (defined in Rel. 17 or later versions) is supported. When the UE does not support the UE capability and the UE supports at least one of BFR in an SCell and BFR by CBRA using a BFR MAC CE in Rel. 16, a BFR MAC CE may be used for event triggered beam reporting.

The UE capability may be defined by the number of new candidate beam (RS) IDs per CC / MAC CE possible to be reported by the UE.

The UE capability may be defined depending on whether performing reporting of a value of received power / reception quality (for example, an RSRP) in a MAC CE is supported.

According to the fifth embodiment above, the UE can perform the above functions while maintaining compatibility with existing specifications

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

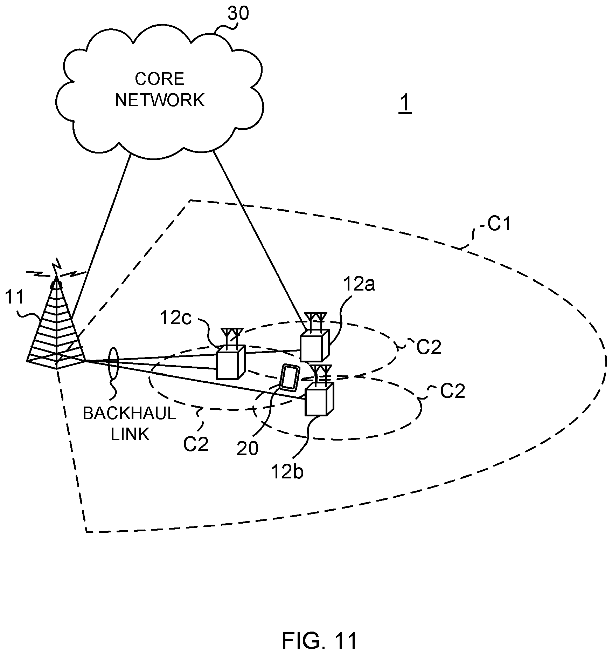

FIG. 11 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

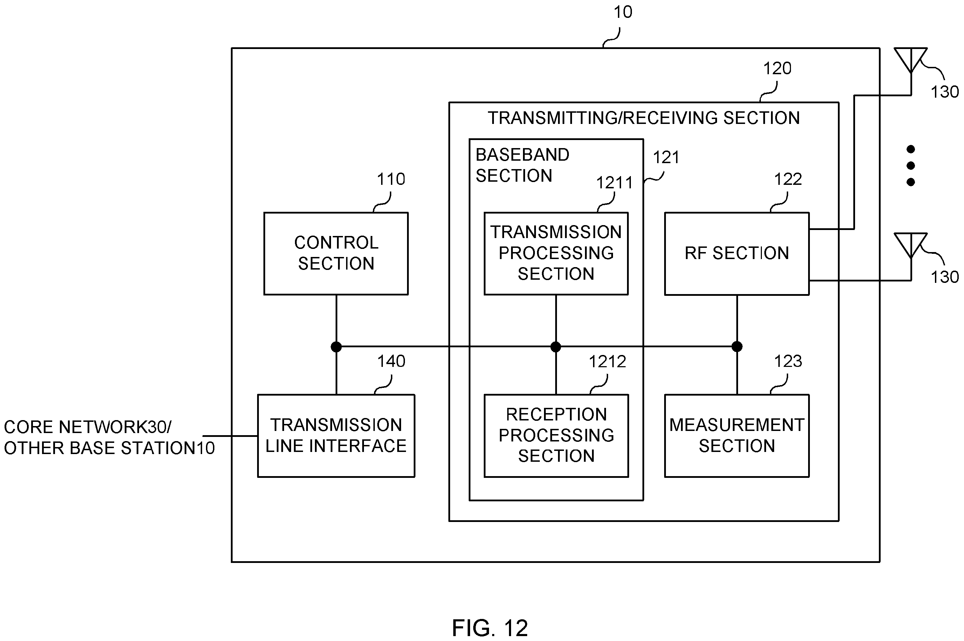

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may control, based on an event related to at least one of a plurality of beams in a terminal, reception of at least one of first beam reporting not based on the event and second beam reporting based on the event. The transmitting/receiving section 120 may receive, when the second beam reporting is performed, at least one of a random access channel related to first information related to a new candidate beam and a Medium Access Control (MAC) control element including second information related to a new candidate beam (first and second embodiments).

(User Terminal)

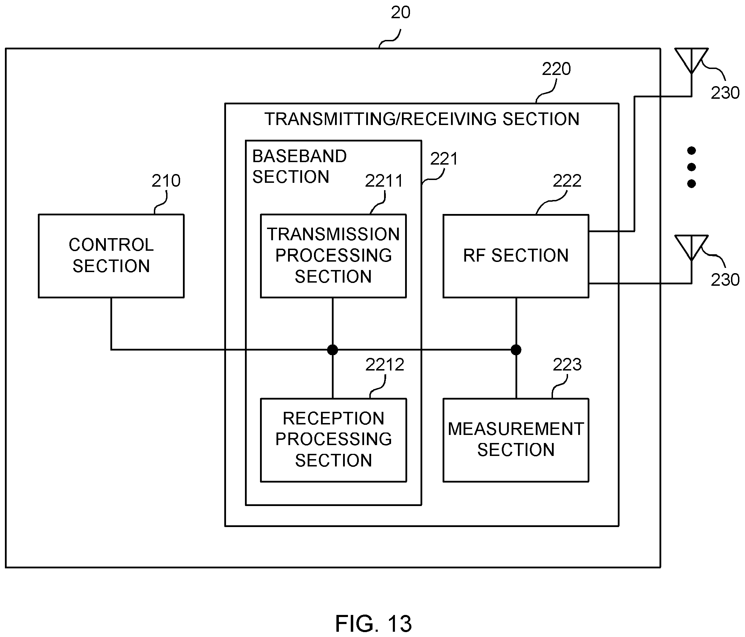

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The control section 210 may control, based on an event related to at least one of a plurality of beams, at least one of first beam reporting not based on the event and second beam reporting based on the event. The transmitting/receiving section 220 may transmit, when the second beam reporting is performed, at least one of a random access channel related to first information related to a new candidate beam and a Medium Access Control (MAC) control element including second information related to a new candidate beam (first and second embodiments).

The MAC control element may have a configuration common to a MAC control element for beam failure detection (second embodiment).

The control section 210 may control at least one of update of a beam state of at least one of a specific channel and signal and reset of a transmission power control parameter of at least one of an uplink channel and an uplink signal, after the transmission of the MAC control element and after elapse of a specific time period (third embodiment).

The control section 210 may perform control to perform at least one of the first beam reporting and the second beam reporting, based on occurrence timing of the event and timing at which the first beam reporting is performed first after the occurrence timing (fourth embodiment).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

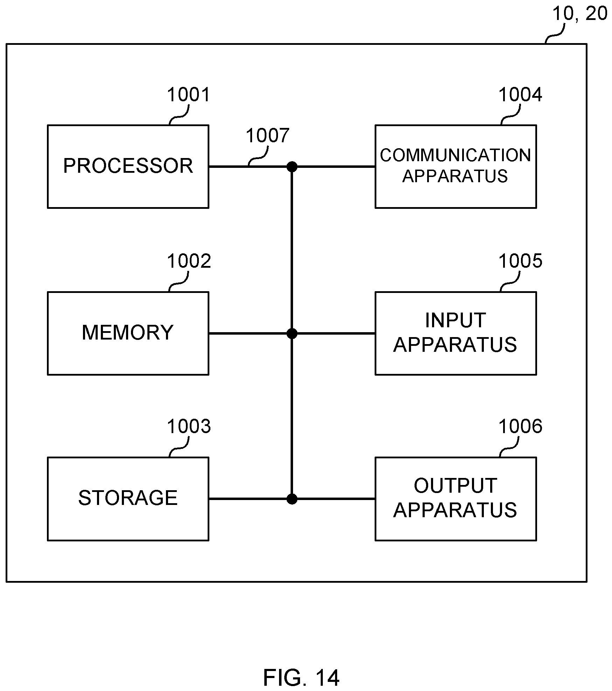

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) may be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on).

Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to -13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs .

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms .

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a control section that controls, based on an event related to at least one of a plurality of beams, at least one of first beam reporting not based on the event and second beam reporting based on the event; and
   a transmitting section that transmits, when the second beam reporting is performed, at least one of a random access channel related to first information related to a new candidate beam and a Medium Access Control (MAC) control element including second information related to a new candidate beam.

2. The terminal according to claim 1, wherein
   the MAC control element has a configuration common to a MAC control element for beam failure detection.

3. The terminal according to claim 1, wherein
   the control section controls at least one of update of a beam state of at least one of a specific channel and signal and reset of a transmission power control parameter of at least one of an uplink channel and an uplink signal, after the transmission of the MAC control element and after elapse of a specific time period.

4. The terminal according to claim 1, wherein
   the control section performs control to perform at least one of the first beam reporting and the second beam reporting, based on occurrence timing of the event and timing at which the first beam reporting is performed first after the occurrence timing.

**5.** A radio communication method for a terminal, the radio communication method comprising:

controlling, based on an event related to at least one of a plurality of beams, at least one of first beam reporting not based on the event and second beam reporting based on the event; and

transmitting, when the second beam reporting is performed, at least one of a random access channel related to first information related to a new candidate beam and a Medium Access Control (MAC) control element including second information related to a new candidate beam.

**6.** A base station comprising:

a control section that controls, based on an event related to at least one of a plurality of beams in a terminal, reception of at least one of first beam reporting not based on the event and second beam reporting based on the event; and

a receiving section that receives, when the second beam reporting is performed, at least one of a random access channel related to first information related to a new candidate beam and a Medium Access Control (MAC) control element including second information related to a new candidate beam.

$N_{LR-RLM}$ and $N_{RLM}$ as a function of maximum number $L_{max}$ of SS/PBCH blocks per half frame

| $L_{max}$ | $N_{LR-RLM}$ | $N_{RLM}$ |
|---|---|---|
| 4 | 2 | 2 |
| 8 | 6 | 4 |
| 64 | 8 | 8 |

FIG. 1

TRANSMISSION OF SIGNAL FOR SEARCH OF NEW CANDIDATE BEAM

RECEIVE BEAM SWEEPING

BEAM RECONFIGURATION INFORMATION

BASE STATION

UE

TIME

SS BLOCK/ CSI-RS

SS BLOCK/ CSI-RS

INTERFERENCE OCCURRENCE

SS BLOCK/ CSI-RS

PRACH

PDCCH

PUCCH/ PUSCH

DETECTION OF BEAM FAILURE

NEW CANDIDATE BEAM IDENTIFICATION

TRANSMISSION OF BFRQ

MONITORING OF BASE STATION RESPONSE

TRANSMISSION OF BEAM RECONFIGURATION COMPLETION

S101    S102    S103    S104    S105    S106

EP 4 380 218 A1

FIG. 2

FIG. 3A

| UE#0 |

BEAM REPORTING

| UE#1 |

| UE#2 |

TIME

FIG. 3B

| UE#0 |

DCI

| UE#1 |

BEAM REPORTING
(on PUSCH)

| UE#2 |

TIME

EP 4 380 218 A1

EP 4 380 218 A1

SERVING
BEAM

NEIGHBOR BEAMS

FIG. 4

FIG. 5A

FIG. 5B

FIG. 6

UE#0

Event Event Event Event

UE#1

UE#2

TIME

FIRST BEAM REPORTING

SECOND BEAM REPORTING

| C7 | C6 | C5 | C4 | C3 | C2 | C1 | SP |
|----|----|----|----|----|----|----|----|

| AC | R | Candidate RS ID or R bits |
|----|---|---------------------------|

· · ·

| AC | R | Candidate RS ID or R bits |
|----|---|---------------------------|

FIG. 7

EP 4 380 218 A1

| AC | R | 1st candidate RS ID or R bits |
|----|---|-------------------------------|
| AC | R | 2nd candidate RS ID or R bits |
| AC | R | 3rd candidate RS ID or R bits |
| AC | R | 4th candidate RS ID or R bits |

FIG. 8

FIG. 9A

SPECIFIC PERIOD

△
Event

FIRST BEAM REPORTING

TIME

EP 4 380 218 A1

FIG. 9B

SPECIFIC PERIOD

△
Event

FIRST BEAM REPORTING

TIME

FIG. 10A

SPECIFIC PERIOD

Event

FIRST BEAM REPORTING

TIME

FIG. 10B

SPECIFIC PERIOD

Event

FIRST BEAM REPORTING

TIME

EP 4 380 218 A1

FIG. 11

FIG. 12

EP 4 380 218 A1

FIG. 13

10, 20

1001
PROCESSOR

1007

1004
COMMUNICATION APPARATUS

1002
MEMORY

1005
INPUT APPARATUS

1003
STORAGE

1006
OUTPUT APPARATUS

FIG. 14

# EP 4 380 218 A1

<table>
<tr><td colspan="2">INTERNATIONAL SEARCH REPORT</td><td>International application No.<br>**PCT/JP2021/028470**</td></tr>
</table>

**A. CLASSIFICATION OF SUBJECT MATTER**

*H04W 16/28*(2009.01)i; *H04W 24/10*(2009.01)i
FI: H04W24/10; H04W16/28

According to International Patent Classification (IPC) or to both national classification and IPC

**B. FIELDS SEARCHED**

Minimum documentation searched (classification system followed by classification symbols)

H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | ZTE. Enhancements on Multi-beam Operation [online]. 3GPP TSG RAN WG1 #105-e R1-2104585. 12 May 2021, [retrieved on 14 February 2022], Internet<URL:https://www.3gpp.org/ftp/tsg_ran/WG1_RL1/TSGR1_105-e/Docs/R1-2104585.zip><br>pages 1, 11 | 1-2, 5-6 |
| A | entire text, all drawings | 3-4 |
| X | WO 2021/149259 A1 (NTT DOCOMO, INC.) 29 July 2021 (2021-07-29)<br>paragraphs [0026], [0033], [0040] | 1-3, 5-6 |
| Y | paragraphs [0026], [0033], [0040] | 4 |
| Y | ERICSSON. Enhancements on Multi-beam Operation [online]. 3GPP TSG RAN WG1 #105-e R1-2105828. 11 May 2021, [retrieved on 14 February 2022], Internet<URL:https://www.3gpp.org/ftp/tsg_ran/WG1_RL1/TSGR1_105-e/Docs/R1-2105828.zip><br>pages 22-23 | 4 |
| A | APPLE INC. On Beam Management Enhancement [online]. 3GPP TSG RAN WG1 #105-e R1-2105087. 12 May 2021, [retrieved on 17 February 2022], Internet<URL:https://www.3gpp.org/ftp/tsg_ran/WG1_RL1/TSGR1_105-e/Docs/R1-2105087.zip><br>pages 9-10, section 3.4 | 1-6 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 February 2022** | **01 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/028470**

| Patent document cited in search report | Publication date (day/month/year) | Patent family member(s) | Publication date (day/month/year) |
|---|---|---|---|
| WO 2021/149259 A1 | 29 July 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010